# EUROPÄISCHE PATENTANMELDUNG

(11) **EP 1 437 858 A1**
(43) Veröffentlichungstag der Anmeldung: **14.07.2004**
(21) Anmeldenummer: 03090008.8
(22) Anmeldetag: 10.01.2003
(51) Int. Cl.: H04L 12/14

(54) **Verfahren zum Zugreifen auf ein Zahlungssystem**

(71) Anmelder: SIEMENS AKTIENGESELLSCHAFT, 80333 München (DE)
(72) Erfinder: Klatt, Uwe, 13507 Berlin (DE); Lilge, Manfred, 14195 Berlin (DE); Ryll, Thomas, 10823 Berlin (DE)

(57) **Zusammenfassung**

Die Erfindung betrifft ein Verfahren zum Zugreifen auf ein Zahlungssystem (ZS) eines Telekommunikationsnetzes (TKN), wobei das Telekommunikationsnetz einen Zugangsknoten (ZK) zum Zugriff durch telekommunikationsnetz-externe Dienstanbieter und einen Anbieterdatenspeicher (ADS) aufweist, in dem den Dienstanbietern zugeordnete Zugreifdauern abgespeichert sind. Dabei wird von einem Dienstrechner (DR) eines telekommunikationsnetz-externen Dienstanbieters auf den Zugangsknoten (ZK) zugegriffen (2), von dem Zugangsknoten die Identität des Dienstanbieters festgestellt, nach erfolgreicher Identitätsfeststellung ein Zugangskennzeichen (ZKZ) erstellt und an den Dienstrechner übertragen (4, 5), woraufhin von dem Dienstrechner mittels des Zugangskennzeichens (ZKZ) unter Umgehung des Zugangsknotens auf das Zahlungssystem zugegriffen (6) wird.
Spätestens mit dem Zugriff des Dienstrechners (DR) auf das Zahlungssystem (ZS) wird eine Zeitmessung begonnen und die dabei gemessene Zeitdauer wird mit der Zugreifdauer des Dienstanbieters verglichen. Sobald die Größe der gemessenen Zeitdauer die Zugreifdauer erreicht, wird das Zugangskennzeichen (ZKZ) als ungültig erklärt.

## Beschreibung

Die Erfindung betrifft ein Verfahren zum Zugreifen auf ein Zahlungssystem eines Telekommunikationsnetzes, wobei das Zahlungssystem zum Durchführen von elektronischen Bezahlvorgängen ausgebildet ist.

Es besteht beispielsweise beim sogenannten "elektronischen Handel" (E-Commerce) oder beim _{"}mobilen Handel" (M-Commerce) ein Bedarf, Zahlungsvorgänge unter Nutzung von Telekommunikationsnetzen durchzuführen. Solche Zahlungsvorgänge können z. B. bei der Erbringung von kostenpflichtigen Diensten oder Leistungen (z. B. Lieferung von Informationen, Daten oder Waren) durch Diensteanbieter über die Telekommunikationsnetze auftreten. Als derartige Telekommunikationsnetze können beispielsweise das Internet, Telefon-Festnetze oder Mobilfunknetze der zweiten oder dritten Generation genutzt werden. Zur Durchführung derartiger Bezahlvorgänge wird von solche Dienste oder Leistungen erbringenden Dienstrechnern (diensterbringende Rechner, dienstbereitstellende Rechner, Applikation-Server) auf in den Telekommunikationsnetzen angeordnete Zahlungssysteme zum Durchführen von elektronischen Bezahlvorgängen zugegriffen.

Der Erfindung liegt die Aufgabe zugrunde, ein besonders sicheres Verfahren zum Zugreifen auf ein Zahlungssystem eines Telekommunikationsnetzes anzugeben.

Diese Aufgabe wird erfindungsgemäß gelöst durch ein Verfahren zum Zugreifen auf ein Zahlungssystem eines Telekommunikationsnetzes, wobei das Zahlungssystem zum Durchführen von elektronischen Bezahlvorgängen ausgebildet ist, wobei das Telekommunikationsnetz einen Zugangsknoten zum zugriff durch telekommunikationsnetz-externe Dienstanbieter und einen Anbieterdatenspeicher aufweist, in dem den Dienstanbietern zugeordnete Zugreifdauern abgespeichert sind, bei dem von einem Dienstrechner eines telekommunikationsnetz-externen Dienstanbieters auf den Zugangsknoten zugegriffen wird, von dem Zugangsknoten die Identität des Dienstanbieters festgestellt wird, nach erfolgreicher Identitätsfeststellung ein Zugangskennzeichen erstellt und an den Dienstrechner übertragen wird, woraufhin von dem Dienstrechner mittels des Zugangskennzeichens unter Umgehung des Zugangsknotens auf das Zahlungssystem zugegriffen wird, spätestens mit dem Zugriff des Dienstrechners auf das Zahlungssystem eine Zeitmessung begonnen wird und die dabei gemessene Zeitdauer mit der Zugreifdauer des Dienstanbieters verglichen wird, und sobald die Größe der gemessenen Zeitdauer die Zugreifdauer erreicht, das Zugangskennzeichen als ungültig erklärt wird, woraufhin ein zugriff des Dienstrechners auf das Zahlungssystem mittels des Zugangskennzeichens unterbunden wird.

Bei diesem erfindungsgemäßen Verfahren ist besonders vorteilhaft, dass ein einmal erstelltes Zugangskennzeichen nur während einer vordefinierten Zugreifdauer gültig ist und während dieser Zugreifdauer eine Mehrzahl von Zugriffen durch den Dienstrechner auf das Zahlungssystem durchgeführt werden kann. Sollte ein derartiges Zugangskennzeichen in unbefugte Hände gelangen, so ist die Missbrauchsmöglichkeit aufgrund der beschränkten Zugriffsdauer begrenzt. Vorteilhafterweise ist jedoch keine ständige erneute Identitätsfeststellung während der vordefinierten Zugreifdauer notwendig. Ebenso ist von Vorteil, dass dienstanbieterindividuell verschieden lange Zugreifdauern vorgesehen werden können und entsprechende Informationen über diese Zugreifdauern in dem Anbieterdatenspeicher dienstanbieterindividuell abgespeichert werden können. Dadurch kann beispielsweise Dienstanbietern, deren Zugriff als risikoträchtig betrachtet wird, eine kürzere Zugreifdauer zugeordnet werden. Dienstanbietern, deren Zugriff als risikoarm bezüglich der Sicherheit der Zahlungsvorgänge eingeschätzt wird, kann eine längere Zugreifdauer zugeordnet werden.

Das erfindungsgemäße Verfahren kann so ablaufen, dass nach erfolgreicher Identitätsfeststellung von dem Zugangsknoten aus dem Anbieterdatenspeicher die dem jeweiligen Dienstanbieter zugeordnete Zugreifdauer ausgelesen und an das Zahlungssystem übertragen wird, von dem Zahlungssystem das Zugangskennzeichen erstellt und der Zugreifdauer zugeordnet wird, von dem Zahlungssystem das Zugangskennzeichen an den Zugangsknoten übertragen wird, und von dem Zahlungssystem die Schritte der Zeitmessung, des Vergleichens und des Ungültigerklärens durchgeführt werden. Bei dieser Ausgestaltungsform des erfindungsgemäßen Verfahrens ist insbesondere vorteilhaft, dass durch das Zahlungssystem eine Überwachung des Zugangskennzeichens, welche die Schritte der Zeitmessung, des Vergleichs und des Ungültigerklärens beinhaltet, unabhängig von dem Zugangsknoten vorgenommen wird. Es ist also vorteilhafterweise nicht notwendig, dass während der gesamten dienstanbieterindividuellen Zugreifdauer ein korrektes Funktionieren des Zugangsknotens sichergestellt bzw. ein korrekt funktionierender Zugangsknoten mit diesen Vorgängen belastet wird.

Das erfindungsgemäße Verfahren kann auch so ablaufen, dass von dem Zugangsknoten zusammen mit der Zugreifdauer eine Nachricht zum Starten eines Zahlungsablaufes zu dem zahlungssystem übertragen wird, daraufhin von dem Zahlungssystem ein Zahlungsablauf gestartet und mit dem Zugangskennzeichen verknüpft wird und beim Zugreifen auf das Zahlungssystem von dem Dienstrechner mit dem Zugangskennzeichen der ihm zugeordnete Zahlungsablauf adressiert wird. Bei dieser Ausgestaltung des Verfahrens können vorteilhafterweise eine Vielzahl von Zahlungsabläufen (z. B. in Form von parallel auf einem Rechner ablaufenden Programmen) auf dem Zahlungssystem gestartet werden; bei Zugriff des Dienstrechners auf das Zahlungssystem kann mittels des Zugangskennzeichens in Form einer Adresse automatisch der jeweils betroffene Zahlungsablauf ausgewählt werden.

Bei dem erfindungsgemäßen Verfahren kann ein Zahlungssystem verwendet werden, welches Bezahlvorgänge sowohl unter Aufbrauchen eines vorausbezahlten Zahlungsguthabens als auch unter Erstellung von nachbezahlbaren Rechnungsdaten durchzuführen imstande ist. Bei Nutzung eines derartigen Zahlungssystems können vorzugsweise externe Dienstanbieter auf das Zahlungssystem zugreifen und während des Zugriffs Zahlvorgänge mittels des zahlungssystems abwickeln, wenn bei diesen Zahlvorgängen vorausbezahlte Zahlungsguthaben (sog. Prepaid-Konten) genutzt werden oder wenn zu einem späteren Zeitpunkt die Zahlungsschulden über eine Rechnung bezahlt werden (bei sog. Postpaid-Kunden).

Bei dem erfindungsgemäßen Verfahren kann zwischen dem Dienstrechner und dem Zugangsknoten eine erste Datenschnittstelle unter Nutzung von nach HTTP-Spezifikationen, XML-Spezifikationen, CORBA-Spezifikationen oder OSA/Parlay-Spezifikationen aufgebauten Nachrichten realisiert werden. Dabei kann besonders vorteilhaft als eine spezielle Ausgestaltung der XML-Technologie die XML/SOAP-Technologie (SOAP = Simple Object Access Protocol) verwendet werden.

Das erfindungsgemäße Verfahren kann so ablaufen, dass als Zugangsknoten ein nach OSA/Parlay-Spezifikationen arbeitendes Gateway verwendet wird. In diesem Fall steht vorteilhafterweise mit der OSA/Parlay-Technik eine einsatzbereite Technik zur Verfügung, so dass die Realisierung des erfindungsgemäßen Verfahrens besonders kostengünstig erfolgen kann.

Bei dem erfindungsgemäßen Verfahren kann als Zugangskennzeichen eine Internet-Protocol-Adresse verwendet werden. Mit einer derartigen Adresse ist es vorzugsweise möglich, den Direktzugriff von dem Dienstrechner zu dem Zahlungssystem über ein IP-Netz, z. B. über dass öffentliche Internet zu realisieren.

Das erfindungsgemäße Verfahren kann auch so ablaufen, dass über eine das Zahlungssystem mit dem Dienstrechner verbindende zweite Daten-Schnittstelle eine Informationsnachricht von dem Zahlungssystem an den Dienstrechner übertragen wird, wenn das Zugangskennzeichen als ungültig erklärt wird. Hierdurch wird der Dienstrechner beziehungsweise ein Nutzer des Dienstrechners vorteilhafterweise darüber informiert, dass eine erneute Identitätsfeststellung unter Nutzung der Dienste des Zugangsknotens notwendig ist, wenn mit dem Dienstrechner auch in Zukunft auf das Zahlungssystem zugegriffen werden soll.

Das erfindungsgemäße Verfahren kann so ablaufen, dass bei einer erneuten erfolgreichen Feststellung der Identität des Dienstanbieters durch den Zugangsknoten, welche durchgeführt wird, bevor die Größe der gemessenen Zeitdauer die Zugreifdauer erreicht, eine die ermittelten Identitätsdaten beinhaltende Übermittlungsnachricht von dem Zugangsknoten an das Zahlungssystem übermittelt wird, woraufhin das Zahlungssystem erneut mit der Zeitmessung beginnt. Dadurch wird vorteilhafterweise eine Ungültigerklärung des Zugangskennzeichens und eine sich daran anschließende, ggf. notwendige Erzeugung eines neuen Zugangskennzeichens vermieden.

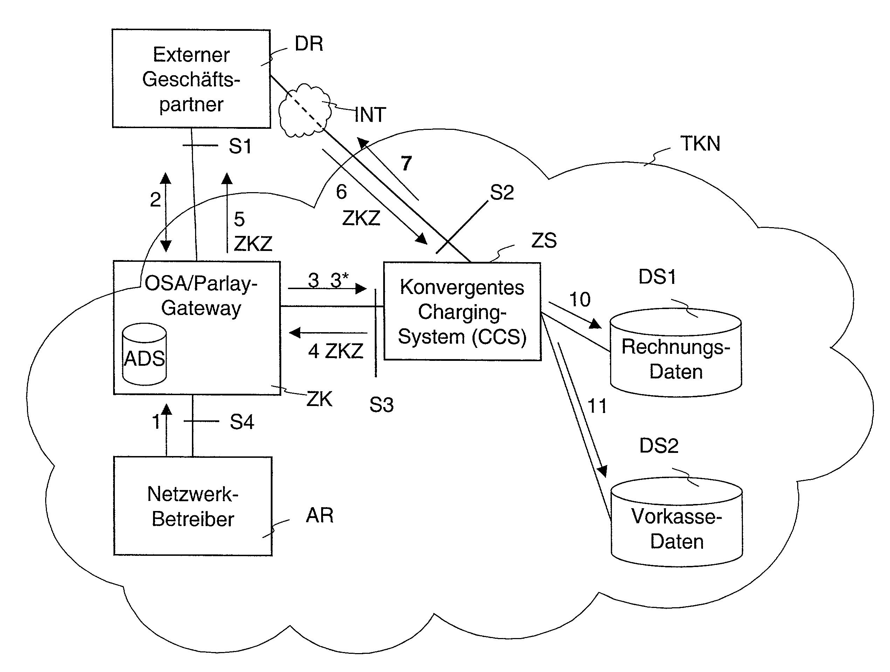

Zur weiteren Erläuterung der Erfindung sind in der einzigen Figur in einer beispielhaften schematischen Darstellung Netzelemente eines Telekommunikationsnetzes zur Durchführung des erfindungsgemäßen Verfahrens sowie beispielhafte Abläufe des erfindungsgemäßen Verfahrens dargestellt.

In der Figur ist ein Telekommunikationsnetz TKN dargestellt, bei dem es sich beispielsweise um ein Mobilfunknetz der zweiten oder dritten Generation oder um ein Telefon-Festnetz handelt. Von diesem Telefonnetz sind lediglich die für das erfindungsgemäße Verfahren wesentlichen Elemente dargestellt. Zu diesen Elementen gehört ein Zahlungssystem ZS ("Konvergentes Charging-System (CCS)"), welches in der Lage ist, elektronische Bezahlvorgänge sowohl unter Aufbrauchen von vorausbezahlten Zahlungsguthaben (die beispielsweise in sogenannten Prepaid-Konten abgelegt sind) als auch unter Erstellung von nachbezahlbaren Rechnungsdaten (die zu einem späteren Zeitpunkt bezahlbaren Rechnungen führen) durchzuführen. Zu diesem Zweck ist das Zahlungssystem ZS mit einem ersten Datenspeicher DS1 und einem zweiten Datenspeicher DS2 verbunden. In dem ersten Datenspeicher DS1 ("Rechnungsdaten") werden solche Informationen abgespeichert, die zu einem späteren Zeitpunkt zur Erstellung von Rechnungen (beispielsweise in der Art der bekannten monatlichen Telefonrechnungen) führen. Derartige Informationen können beispielsweise in Form sogenannter "Call-Data-Records" (CDR) abgespeichert werden. In dem zweiten Datenspeicher DS2 ("Vorkasse-Daten") sind Informationen über jeweilige Zahlungsguthaben von Teilnehmern gespeichert; derartige zahlungsguthaben werden oftmals als "Prepaid-Guthaben" bezeichnet. Der zweite Datenspeicher DS2 stellt also einen Prepaid-Konten-Datenspeicher dar.

Das Zahlungssystem ZS ist mit einem Zugangsknoten ZK ("OSA/Parlay-Gateway") verbunden, wobei dieser Zugangsknoten ZK einem Dienstrechner DR (z.B. einen Application-Server) eines externen Dienstanbieters einen Zugriff auf das Telekommunikationsnetz TKN und damit auch auf das in diesem Telekommunikationsnetz TKN befindliche Zahlungssystem ZS ermöglicht. Ein solcher zugriff kann auch dann hergestellt werden, wenn der Dienstrechner DR zum ersten Mal auf das Telekommunikationsnetz TKN mit dem Zugangsknoten ZK zugreift und bis zu diesem Zeitpunkt noch nicht mit dem zahlungssystem ZS kommuniziert hat. Für diesen zugriff ist zwischen dem Dienstrechner DR und dem Zugangsknoten ZK eine erste Datenschnittstelle S1 ausgebildet, über die Nachrichten zwischen dem Dienstrechner DR und dem Zugangsknoten ZK übertragen werden. Solche Nachrichten können beispielsweise nach der bekannten HTTP-Spezifikation (HTTP = Hypertext-Transfer-Protocol), nach der bekannten CORBA-Spezifikation (CORBA = Common-Object-Request-Broker-Architecture), nach der bekannten XML-Spezifikation oder auch nach der bekannten OSA/Parlay-Spezifikation aufgebaut sein. Ein weiteres Beispiel für die Realisierung der Schnittstelle S1 ist die XML/SOAP-Technologie. Diesen Übertragungsmechanismen ist gemein, dass für sie anwendungsbereite Nachrichtenerzeugungs- und Nachrichtenempfangseinrichtungen zur Verfügung stehen, so dass sich die Schnittstelle S1 mit geringem Aufwand kostengünstig realisieren lässt und darüber hinaus durch Nutzung von standardisierten Datenübertragungsmechanismen eine weltweit benutzbare Schnittstelle realisiert werden kann. Der Zugangsknoten ZK wird in diesem Ausführungsbeispiel von einem sogenannten OSA/Parlay-Gateway gebildet. Darunter ist eine Einrichtung zu verstehen, welche unter Nutzung der bekannten OSA/Parlay-Nachrichtenübertragungsmechanismen eine Datenverbindung zwischen dem Inneren des Telekommunikationsnetzes TKN und dem Netzäußeren aufbauen kann. Ein derartiger Zugangsknoten ZK kann auch als eine an sich bekannte offene mobile Internet-Plattform (OMIP) ausgestaltet sein. Diese Ausgestaltung ist insbesondere dann vorteilhaft, wenn der Dienstrechner unter Nutzung des Internets auf den Zugangsknoten ZK des Telekommunikationsnetzes TKN zugreift.

Der Zugangsknoten ZK ist mit einem Administrationsrechner AR eines Netzwerkbetreibers des Telekommunikationsnetzes TKN verbunden, wobei der Netzwerkbetreiber mit dem Administrationsrechner AR die Funktion des Zugangsknotens ZK steuern kann. Der Zugangsknoten ZK beinhaltet insbesondere einen Anbieterdatenspeicher ADS, auf den der Administrationsrechner AR zugreifen kann.

Zwischen dem Dienstrechner DR und dem Zahlungssystem ZS ist eine zweite Datenschnittstelle S2 angeordnet, welche dem Dienstrechner einen direkten Zugriff auf das Zahlungssystem ZS (ohne Benutzung des Zugangsknotens ZK) ermöglicht. Bei dieser zweiten Schnittstelle S2 kann es sich beispielsweise um eine HTTP-basierte Schnittstelle handeln (d.h. um eine Schnittstelle, die das HTTP-Protokoll verwendet), über die Datennachrichten mittels des sogenannten XML/SOAP-Protocols übertragen werden (XML = Extensible Markup Language, SOAP = Simple Object Access Protocol). Die zweite Datenschnittstelle S2 kann beispielsweise in Form eines "Charging Interfaces" realisiert sein, wie es in der Druckschrift "ETSI TS 129 198-12, Universal Mobile Telecommunications System; Open Service Access; Application Programming Interface; Part 12: Charging" beschrieben ist.

Eine dritte Datenschnittstelle S3 zwischen dem Zahlungssystem ZS und dem Zugangsknoten ZK und eine vierte Datenschnittstelle S4 zwischen dem zugangsknoten ZK und dem Administrationsrechner AR kann ebenfalls unter Nutzung des HTTP- bzw. des XML/SOAP-Protokolls realisiert sein.

Zahlungssysteme ZS der in der Figur dargestellten Art als solche sind bekannt und werden in Telekommunikationsnetzen, z. B. in Mobilfunknetzen bereits zur Abrechnung von Telekommunikationsgebühren eingesetzt. Derartige Zahlungssysteme können käuflich erworben werden, als ein Beispiel soll das Zahlungssystem "Payment@vantage" der Firma Siemens AG genannt werden, für das beispielsweise in der Druckschrift "Realtime-Payment - Market, Trends, Product - Edition 10.2001" auf den Seiten 74 bis 80 geworben wird.

Das Zahlungssystem ZS stellt ein sogenanntes "Convergent-Charging-System" (CCS) dar, welches zur Abrechnung bzw. Vergebührung von Telekommunikationsdiensten für Vorkasse-Kunden (Prepaid-Kunden) und Vertrags-Kunden (Postpaid-Kunden) eingesetzt wird. Erfindungsgemäß wird externen Geschäftspartnern mit ihren Dienstrechnern ermöglicht, auf ein derartiges Zahlungssystem zuzugreifen und unter Nutzung eines derartigen Zahlungssystems Zahlungsvorgänge durchzuführen. Dabei können die externen Geschäftspartner als ein Dienstanbieter die Rolle eines Zahlungsempfängers (z. B. eines Händlers) ausfüllen, der von einem Zahlungssender (z. B. einem Kunden) eine Geldzahlung verlangt. Dazu wird von dem Zahlungssystem ZS auf den ersten Datenspeicher DS1 und den zweiten Datenspeicher DS2 zugegriffen (Pfeile 10 und 11).

Bereits im Vorfeld des erfindungsgemäßen Verfahrens greift der Administrationsrechner AR des Netzwerkbetreibers auf den Anbieterdatenspeicher ADS des Zugangsknotens ZK zu und schreibt in diesen Anbieterdatenspeicher Authentifizierungsund Autorisierungsdaten für die verschiedenen externen Geschäftspartner mit ihren Dienstrechnern. In diesem Ausführungsbeispiel ist nur ein Dienstrechner DR dargestellt. Zu den Authentifizierungs- und Autorisierungsdaten gehören z. B. Kennungen des Dienstrechners DR. Wenn als ein solcher Dienstrechner DR ein mit dem Internet verbundener Netzrechner verwendet wird, dann kann eine derartige Kennung z. B. in einer Internetadresse (141.41.49.12) abgespeichert sein; wenn ein solcher Dienstrechner ein Mobiltelefon umfasst, dann kann eine derartige Kennung z. B. in Form einer MSISDN oder einer IMSI abgespeichert sein. Als ein Teil der Autorisierungsdaten wird von dem Administrationsrechner AR dienstanbieterindividuell eine Zugreifdauer in den Anbieterdatenspeicher ADS eingeschrieben. Unter einer derartigen Zugreifdauer ist eine Zeitspanne zu verstehen, während der ein netzexterner Dienstrechner DR nach einer einmalig stattfindenden Identitätsfeststellung dieses Dienstrechners ohne weitere Identitätsfeststellung auf das Zahlungssystem ZS zugreifen darf und mittels dieses Zahlungssystems Zahlungsvorgänge durchführen darf.

Eine derartige Zugreifdauer kann auch als eine maximale Lebensdauer einer Zahlungs-Sitzung bzw. einer Vergebührungssitzung des Zahlungssystems ZS betrachtet werden. Diese Administrations- bzw. Einschreibvorgänge sind in der Figur durch einen Pfeil 1 (Administration der Autorisierungs- und Authentifizierungsdaten und der Zugreifdauern für die netzexternen Geschäftspartner bzw. deren Dienstrechner) symbolisch dargestellt. Derartige Administrationsvorgänge können jedoch auch von anderen Netzwerkelementen (und nicht nur mittels des Administrationsrechners AR) vorgenommen werden.

Zu Beginn des erfindungsgemäßen Verfahrens wird von dem Dienstrechner DR über die erste Datenschnittstelle S1 auf den Zugangsknoten ZK zugegriffen und diesem mittels einer entsprechenden Nachricht (beispielsweise einer OSA-Parlay-Nachricht) ein Nutzungswunsch für das Zahlungssystem ZS mitgeteilt. Daraufhin wird von dem zugangsknoten ZK die Identität des Dienstrechners DR (bzw. des externen Geschäftspartners) elektronisch zweifelsfrei ermittelt. Dies kann beispielsweise unter Nutzung der Mobilfunkrufnummer MSISDN (MSISDN = Mobile Station ISDN Number) geschehen (Authentifizierung).

Zur technischen Realisierung der Authentifizierung können die Vorgänge verwendet werden, wie sie in der Druckschrift "3GPP TS 29.198-3; 3^{rd} Generation Partnership Project; Technical Specifikation Group Core Network; Open Service Access; Application Programming Interface; Part 3: Framework" insbesondere im Kapitel 6.1.1.5 "API Level Authentication" beschrieben sind. Dabei wird ein an sich bekanntes "OSA Framework" genutzt. Es kann z. B. der in Kap. 8.1.3.1 "SignServiceAggreement" beschriebene Ablauf eingesetzt werden. Der Prozess der Authentifizierung ist in der Figur als Pfeil 2 symbolisiert.

Daraufhin erteilt der Zugangsknoten ZK dem Dienstrechner DR eine Berechtigung zur Nutzung des Zahlungssystems ZS (Autorisierung). Dabei wird ein Zugangskennzeichen (beispielsweise eine alphanumerische Zeichenkette) an den Dienstrechner DR übertragen. Die Autorisierung und Authentifizierung findet unter Benutzung der in dem Anbieterdatenspeicher ADS abgelegten Authentifizierungs- und Autorisierungsdaten statt.

Im Folgenden wird die Erstellung und Verwendung des Zugangskennzeichens detailliert erläutert. Nach einer erfolgreichen Identitätsfeststellung (Authentifizierung) liest der Zugangsknoten ZK aus dem Anbieterdatenspeicher ADS die für den entsprechenden Dienstanbieter bzw. den entsprechenden Dienstrechner DR dort abgelegte Zugreifdauer aus.

Diese Zugreifdauer wird von dem Zugangsknoten ZK gemeinsam mit der Information, dass für den Dienstrechner DR ein neuer Zahlungsablauf in dem Zahlungssystem ZS gestartet werden soll, zu dem Zahlungssystem ZS übertragen. Ein derartiger Zahlungsablauf kann auch als eine Zahlungssitzung bzw. Vergebührungssitzung bezeichnet werden und kann beispielsweise durch ein Rechnerprogramm realisiert werden, welches auf dem als Rechner ausgebildeten Zahlungssystem ZS parallel zu anderen dort bereits laufenden Rechnerprogrammen gestartet wird. Diese Nachrichtenübertragung zwischen dem Zugangsknoten ZK und Zahlungssystem ZS ist in der Figur mittels des Pfeils 3 (Eröffnung der Vergebührungssitzung und Übergabe der Lebensdauer) dargestellt. Ein derartiger Start eines Zahlungsablaufes kann von dem Zugangsknoten z. B. durch einen an sich bekannten _{"}OSA Service Access", insbesondere in der Ausprägung _{"}Initial Access" veranlasst werden, wie er in der o. g. Druckschrift _{"}3GPP TS 29.198-3" insb. im Kap. 6.1.1.1 "Initial Access" beschrieben ist. Auf den Empfang dieser Nachricht zum Starten eines Zahlungsablaufes hin startet das Zahlungssystem ZS einen derartigen Zahlungsablauf in Form eines Rechnerprogramms und legt eine Internetadresse fest, mittels derer der Dienstrechner DR auf diesen Zahlungsablauf, d. h. auf das laufende Zahlungsablaufprogramm, zugreifen kann. Diese Internetadresse (Internet-Protocol-Adresse, IP-Adresse) stellt das Zugangskennzeichen ZKZ dar, welches mit dem Zahlungsablauf verknüpft wird. Ein derartiges Zugangskennzeichen ZKZ stellt auch eine zugriffsreferenz auf den Zahlungsablauf dar, die oben genannte IP-Adresse ist lediglich als ein Beispiel zu verstehen. Diese Zugriffsreferenz kann beispielsweise auch die Form einer Zugangs-Portnummer oder ganz allgemein die Form einer alphanumerischen Zeichenkette annehmen. Jedoch ist in jedem Falle sicherzustellen, dass das Zugangskennzeichen ZKZ eindeutig mit dem Zahlungsablauf verknüpft (zugeordnet) ist und dass von einer netzexternen Stelle aus ausschließlich unter Nutzung des Zugangskennzeichens auf den jeweiligen Zahlungsablauf zugegriffen werden kann. Das Zugangskennzeichen wird ebenfalls in dem Zahlungssystem gemeinsam mit der dienstanbieterindividuellen Zugreifdauer bzw. zugeordnet zu der dienstanbieterindividuellen Zugreifdauer abgespeichert. Daraufhin wird von dem Zahlungssystem ZS das Zugangskennzeichen ZKZ an den zugangsknoten übertragen (Pfeil 4), welcher das Zugangskennzeichen zu dem Dienstrechner DR überträgt (Pfeil 5).

Nun liegt in dem Dienstrechner DR das Zugangskennzeichen ZKZ vor und ermöglicht dem Dienstrechner, direkt (d. h. unter Umgehung des Zugangsknotens, beispielsweise unter Benutzung eines zwischen dem Dienstrechner und dem Telekommunikationsnetz TKN angeordneten Internets INT oder unter Benutzung des an sich bekannten "OSA Content Based Charging") auf das Zahlungssystem zuzugreifen (Pfeil 6).

Von dem Zahlungssystem ZS werden nun die Zugriffe des Dienstrechners DR auf das Zahlungssystem ZS überwacht. Zu diesem Zweck wird spätestens mit dem ersten Zugriff des Dienstrechners DR über die Datenschnittstelle S2 auf das Zahlungssystem ZS in dem Zahlungssystem ZS eine Zeitmessung gestartet und die dabei gemessene zeitdauer mit der Zugriffdauer (die von dem zugangsknoten ZK an das Zahlungssystem ZS übertragen und dort gespeichert wurde) verglichen. Die zeitmessung in dem Zahlungssystem ZS kann jedoch auch schon zu einem früheren Zeitpunkt gestartet werden, beispielsweise beim Empfang der Zugreifdauer von dem Zugangsknoten ZK (Pfeil 3), beim Erstellen des Zugangskennzeichens in dem Zahlungssystem ZS oder beim Übermitteln des Zugangskennzeichens über den Zugangsknoten ZK an den Dienstrechner DR (Pfeil 4). In einem weiteren Ausführungsbeispiel kann als Startpunkt der Zeitmessung auch der Zeitpunkt der Identitätsfeststellung durch den Zugangsknoten ZK verwendet werden. Dabei würde dieser Zeitpunkt gemeinsam mit der Lebensdauer von dem Zugangsknoten ZK an das Zahlungssystem ZS übergeben werden (Pfeil 3).

Sobald die Größe der gemessenen Zeitdauer die Größe der Zugreifdauer erreicht (d. h. die maximale Zugreifdauer abgelaufen ist), wird von dem Zahlungssystem ZS das Zugangskennzeichen ZKZ als ungültig erklärt und jeder weitere Zugriff mittels dieses zugangskennzeichens unterbunden. Eine solche Ungültigerklärung des Zugangskennzeichens kann beispielsweise im Löschen des Zugangskennzeichens im Zahlungssystem ZS bestehen, die Ungültigerklärung kann jedoch auch ausgeführt werden durch Abspeichern eines Datensatzes in einer geeigneten Datenbank, welches das Zugangskennzeichen und den Zeitpunkt der Erklärung der Ungültigkeit enthält. Sobald das Zugangskennzeichen als ungültig erklärt bzw. gekennzeichnet ist, kann der Dienstrechner DR nicht mehr mittels dieses Zugangskennzeichens auf das Zahlungssystem ZS bzw. auf den in dem Rechner DR ablaufenden Zahlungsablauf zugreifen, denn eine mit diesem ungültigen Zugangskennzeichen versehene Zugreifnachricht 6 wird von dem zahlungssystem blockiert, d. h. sie hat keinen Einfluss auf das adressierte Zahlungsablauf-Programm. Daher sendet das Zahlungssystem ZS eine Informationsnachricht (Pfeil 7) an den Dienstrechner. Mit dieser Informationsnachricht wird der Dienstrechner darüber informiert, dass das bisher benutzte Zugangskennzeichen ungültig ist und dass bei weiterhin bestehenden Zugriffswünschen eine neue Identitätsfeststellung an dem Zugangsknoten ZK notwendig ist. Auf eine derartige neue Identitätsfeststellung hin wird dann in der bekannten Art und Weise ein neues Zugangskennzeichen erzeugt, mit dem der Dienstrechner wieder für die Zeitspanne der individuellen Zugreifdauer auf das Zahlungssystem ZS zugreifen kann.

Bei dem beschriebenen Verfahren zum Zugreifen auf ein Zahlungssystem eines Telekommunikationsnetzes ist besonders vorteilhaft, dass eine zeitliche Beschränkung der Zugreifmöglichkeiten bei einem einmal von dem Zahlungssystem ausgegebenen Zugangskennzeichens erreicht wird, wohingegen eine ständige Neu-Identitätsfeststellung während der vorgewählten Zugriffsdauer nicht notwendig ist. Durch Benutzen einer dienstanbieterindividuellen Zugreifdauer kann das Verfahren für die entsprechenden externen Dienstanbieter individualisiert werden. Die Zugreifdauer kann nämlich an Änderungen der Geschäftsbeziehung zwischen Zahlungssystem und Dienstanbieter angepasst werden. So kann beispielsweise nach einer langjährigen und erfolgreichen Geschäftsbeziehung die Zugreifdauer verlängert werden, so dass sich das aufgrund der langjährigen Geschäftbeziehung geringere Risiko in einem höheren Vertrauen von Seiten des Zahlungssystems in den jeweiligen externen Dienstanbieter bzw. Geschäftspartner widerspiegelt. Bei derartigen langjährigen und erfolgreichen Geschäftsbeziehungen, bei denen z. B. noch kein Missbrauchsfall eines übermittelten Zugangskennzeichens aufgetreten ist, kann nämlich auf Seiten des Telekommunikationsnetzes TKN davon ausgegangen werden, dass der jeweilige Dienstrechner DR bzw. die von diesem benutzte Netzinfrastruktur ausreichend gegen ein unbefugtes Abhören und späteres Benutzen des Zugangskennzeichens geschützt ist. Diese Erkenntnis kann sich in der Gewährung einer längeren Zugreifdauer niederschlagen.

Um auch externen Dienstanbietern, die im Telekommunikationsnetz unbekannt sind (bzw. unbekannten Dienstrechnern), den Zugriff auf das Zahlungssystem zu ermöglichen, kann in dem Anbieterdatenspeicher ADS des Zugangsknotens ZK für "unbekannte" Dienstanbieter eine Standard-Zugreifdauer abgespeichert sein. Diese Standard-Zugreifdauer kann vorzugsweise relativ kurz ausgestaltet sein, da auf Seiten des Telekommunikationsnetzes für diesen "unbekannten" Dienstrechner beispielsweise die Sicherheit gegen unbefugtes Abhören des Zugangskennzeichens schwer einzuschätzen ist, so dass die relativ kurze Zugreifdauer dem erhöhten Risiko Rechnung trägt.

Das erfindungsgemäße Verfahren schließt vorteilhafterweise die Möglichkeit ein, dass der Dienstrechner jederzeit bei dem Zugangsknoten eine erneute Identitätsfeststellung (2) durchführen lassen kann. Daraufhin wird bei erfolgreicher Identitätsfeststellung erneut die dienstanbieterindividuelle Zugreifdauer aus dem Anbieterdatenspeicher ausgelesen und mittels einer Übermittlungsnachricht 3* zusammen mit Informationen über die festgestellte Identität an das Zahlungssystem übertragen. Geschieht dies, bevor die Größe der gemessenen Zeitdauer die Zugreifdauer erreicht (d.h. zu einem Zeitpunkt, an dem das Zugangskennzeichen noch gültig ist), dann setzt das Zahlungssystem daraufhin einen zur Zeitmessung eingesetzten Timer (Zeitmessstufe) zurück und startet damit die Zeitmessung erneut. Dadurch beginnt für den Dienstrechner die maximale Zugreifdauer wieder "von vorn zu laufen". Durch diese Ausgestaltung des erfindungsgemäßen Verfahrens wird sichergestellt, dass bei einer rechtzeitig von dem Dienstrechner DR veranlassten neuen Identitätsfeststellung die erlaubte maximale Zugreifdauer nicht abläuft, so dass das Zugangskennzeichen nicht ungültig wird, sondern dass das Zugangskennzeichen gewissermaßen in seiner Gültigkeit "verlängert" wird. Dadurch können unerwünschte Verzögerungen durch unterbundene Zugriffe und die dann zwingend notwendige erneute Identitätsfeststellung vermieden werden.

## Patentansprüche

1. Verfahren zum Zugreifen auf ein Zahlungssystem (ZS) eines Telekommunikationsnetzes (TKN), wobei das Zahlungssystem (ZS) zum Durchführen von elektronischen Bezahlvorgängen ausgebildet ist, wobei das Telekommunikationsnetz (TKN) einen Zugangsknoten (ZK) zum zugriff durch telekommunikationsnetz-externe Dienstanbieter und einen Anbieterdatenspeicher (ADS) aufweist, in dem den Dienstanbietern zugeordnete Zugreifdauern abgespeichert sind, bei dem
- von einem Dienstrechner (DR) eines telekommunikationsnetz-externen Dienstanbieters auf den Zugangsknoten (ZK) zugegriffen (2) wird,
- von dem Zugangsknoten (ZK) die Identität des Dienstanbieters festgestellt wird,
- nach erfolgreicher Identitätsfeststellung ein Zugangskennzeichen (ZKZ) erstellt und an den Dienstrechner (DR) übertragen (4, 5) wird, woraufhin von dem Dienstrechner (DR) mittels des Zugangskennzeichens (ZKZ) unter Umgehung des Zugangsknotens (ZK) auf das Zahlungssystem (ZS) zugegriffen (6) wird,
- spätestens mit dem Zugriff des Dienstrechners (DR) auf das Zahlungssystem (ZS) eine Zeitmessung begonnen wird und die dabei gemessene Zeitdauer mit der Zugreifdauer des Dienstanbieters verglichen wird, und
- sobald die Größe der gemessenen Zeitdauer die Zugreifdauer erreicht, das Zugangskennzeichen (ZKZ) als ungültig erklärt wird, woraufhin ein Zugriff (6) des Dienstrechners (DR) auf das Zahlungssystem (ZS) mittels des Zugangskennzeichens (ZKZ) unterbunden wird.

2. Verfahren nach Anspruch 1,
**dadurch gekennzeichnet, dass**
- nach erfolgreicher Identitätsfeststellung von dem Zugangsknoten (ZK) aus dem Anbieterdatenspeicher (ADS) die dem jeweiligen Dienstanbieter zugeordnete Zugreifdauer ausgelesen und an das Zahlungssystem (ZS) übertragen wird,
- von dem zahlungssystem (ZS) das Zugangskennzeichen (ZKZ) erstellt und der Zugreifdauer zugeordnet wird,
- von dem Zahlungssystem (ZS) das Zugangskennzeichen (ZKZ) an den Zugangsknoten übertragen (4) wird, und
- von dem Zahlungssystem (ZS) die Schritte der Zeitmessung, des Vergleichens und des Ungültigerklärens durchgeführt werden.

3. Verfahren nach Anspruch 2,
**dadurch gekennzeichnet, dass**
- von dem Zugangsknoten (ZK) zusammen mit der Zugreifdauer eine Nachricht zum Starten eines Zahlungsablaufes zu dem Zahlungssystem übertragen (3) wird,
- daraufhin von dem Zahlungssystem ein Zahlungsablauf gestartet und mit dem zugangskennzeichen (ZKZ) verknüpft wird und
- beim Zugreifen (6) auf das Zahlungssystem (ZS) von dem Dienstrechner (DR) mit dem Zugangskennzeichen (ZKZ) der ihm zugeordnete Zahlungsablauf adressiert wird.

4. Verfahren nach einem der Ansprüche 1 bis 3,
**dadurch gekennzeichnet, dass**
- ein Zahlungssystem (ZS) verwendet wird, welches Bezahlvorgänge sowohl unter Aufbrauchen eines vorausbezahlten Zahlungsguthabens (DS2) als auch unter Erstellung von nachbezahlbaren Rechnungsdaten (DS1) durchzuführen imstande ist.

5. Verfahren nach einem der Ansprüche 1 bis 4,
**dadurch gekennzeichnet, dass**
- zwischen dem Dienstrechner (DR) und dem Zugangsknoten (ZK) eine erste Daten-Schnittstelle (S1) unter Nutzung von nach HTTP-Spezifikationen aufgebauten Nachrichten realisiert wird.

6. Verfahren nach einem der Ansprüche 1 bis 5,
**dadurch gekennzeichnet, dass**
- zwischen dem Dienstrechner (DR) und dem Zugangsknoten (ZK) eine erste Daten-Schnittstelle (S1) unter Nutzung von nach XML-Spezifikationen aufgebauten Nachrichten realisiert wird.

7. Verfahren nach einem der Ansprüche 1 bis 5,
**dadurch gekennzeichnet, dass**
- zwischen dem Dienstrechner (DR) und dem Zugangsknoten (ZK) eine erste Daten-Schnittstelle (S1) unter Nutzung von nach CORBA-Spezifikationen aufgebauten Nachrichten realisiert wird.

8. Verfahren nach einem der Ansprüche 1 bis 5,
**dadurch gekennzeichnet, dass**
- zwischen dem Dienstrechner (DR) und dem Zugangsknoten (ZK) eine erste Daten-Schnittstelle (S1) unter Nutzung von nach OSA/Parlay-Spezifikationen aufgebauten Nachrichten realisiert wird.

9. Verfahren nach einem der Ansprüche 1 bis 5 und 8,
**dadurch gekennzeichnet, dass**
- als Zugangsknoten (ZK) ein nach OSA/Parlay-Spezifikationen arbeitendes Gateway verwendet wird.

10. Verfahren nach einem der Ansprüche 1 bis 9,
**dadurch gekennzeichnet, dass**
- als Zugangskennzeichen (ZKZ) eine Internet-Protocol-Adresse verwendet wird.

11. Verfahren nach einem der Ansprüche 1 bis 10,
**dadurch gekennzeichnet, dass**
- über eine das Zahlungssystem (ZS) mit dem Dienstrechner (DR) verbindende zweite Daten-Schnittstelle (S2) eine Informationsnachricht von dem Zahlungssystem (ZS) an den Dienstrechner (DR) übertragen (7) wird, wenn das Zugangskennzeichen (ZKZ) als ungültig erklärt wird.

12. Verfahren nach einem der Ansprüche 1 bis 11,
**dadurch gekennzeichnet, dass** bei einer erneuten erfolgreichen Feststellung (2) der Identität des Dienstanbieters durch den Zugangsknoten (ZK), welche durchgeführt wird, bevor die Größe der gemessenen Zeitdauer die Zugreifdauer erreicht,
- eine die ermittelten Identitätsdaten beinhaltende Übermittlungsnachricht (3*) von dem Zugangsknoten (ZK) an das Zahlungssystem (ZS) übermittelt wird, woraufhin das Zahlungssystem erneut mit der Zeitmessung beginnt.
